# EUROPEAN PATENT SPECIFICATION

(11) **EP 2 911 452 B1**
(45) Date of publication and mention of the grant of the patent: **06.06.2018**
(21) Application number: 12887171.2
(22) Date of filing: 26.10.2012
(51) Int. Cl.: H04W 76/02, H04W 36/00

(54) **METHOD, DEVICE AND SYSTEM FOR REDIRECTING AIR INTERFACE CONNECTION BETWEEN SYSTEMS**
VERFAHREN, VORRICHTUNG UND SYSTEM ZUM WEITERLEITEN VON LUFTSCHNITTSTELLENVERBINDUNGEN ZWISCHEN SYSTEMEN
PROCÉDÉ, DISPOSITIF ET SYSTÈME POUR REDIRIGER UNE CONNEXION D'INTERFACE RADIO ENTRE DES SYSTÈMES

(43) Date of publication of application: 26.08.2015
(73) Proprietor: Huawei Technologies Co., Ltd., Longgang District Shenzhen, Guangdong 518129 (CN)
(72) Inventor: XING, Pingping, Shenzhen Guangdong 518129 (CN); DAI, Mingzeng, Shenzhen Guangdong 518129 (CN)
(74) Representative: Maiwald Patent- und Rechtsanwaltsgesellschaft mbH
(86) International application number: PCT/CN2012/083546
(87) International publication number: WO 2014/063337

(56) References cited:
- WO-A1-2009/081268
- WO-A1-2011/046485
- CN-A- 101 742 591
- CN-A- 101 841 858
- CN-A- 102 014 451
- CN-A- 102 111 900
- US-A1- 2010 317 378
- US-A1- 2012 120 789

## Description

### BACKGROUND

With the rapid development of a mobile communications technology, a long term evolution (Long Term Evolution, LTE for short) communications system is widely applied worldwide. At the same time, a 3G system, such as a universal mobile telecommunications system (Universal Mobile Telecommunications System, UMTS for short), has rather complete coverage and excellent performance after a long period of establishment and optimization, and the LTE will coexist with systems of other modes in a long term.

In this situation in which multiple modes coexist, based on protection of a circuit switched (Circuit Switched, CS for short) service investment and a deployment policy of an LTE/evolved packet core network (Evolved Packet Core, EPC for short), an operator adopts an original CS domain voice solution to provide a voice service, but an LTE system is only used to process a data service; therefore, a user equipment (User equipment, UE for short) in coverage of the LTE system switches to a CS network to complete a CS service when initiating the CS service. In the prior art, when systems of different modes coexist, a redirection method adopted for implementing service switching is relatively complicated, and includes: first setting up, by a UE, a connection with a first mode system, and making a redirection decision after completing the connection; when it is determined to redirect the UE to a second mode system, releasing the connection between the UE and the first mode system; and re-selecting, by the UE, a second mode cell to camp on, and setting up a connection with the second mode system.

In the redirection method in the prior art, signaling interaction is frequent, an operation procedure is complicated, and long time is consumed, so that a call setup delay is relatively large, thereby affecting user experience.

US 2010/317 378 A1 discloses a method for interworking circuit service fallback. A UE that is currently connected to a Mobile Management Entity, MME, via an evolved Node-B, eNodeB, can decide to fall back to circuit switched service and tunnel, via that MME, a request to this effect to an interworking service, IWS. The UE obtains connection parameters for this fallback operation through the tunnel, the existing connection to the MME is severed, and the UE connects to a base transceiver station, BTS, in the circuit switched network.

### SUMMARY

Embodiments of the present invention provide a method according to claim 1 and a first mode network device according to claim 7 for inter-system air interface connection redirection, so that a delay of an interoperation between systems can be reduced during redirection.

In a first aspect, the present invention provides a method for inter-system air interface connection redirection, including: receiving, by a first mode network device, a connection request message sent by a user equipment UE through a first mode cell, and making a redirection decision; after the first mode network device determines to redirect the UE to a second mode cell managed by a second mode network device, sending a notification message to request the second mode network device to allocate a connection setup parameter for the UE; receiving, by the first mode network device, a response message carrying the connection setup parameter sent by the second mode network device, and sending the connection setup parameter to the UE, so that the UE sets up a connection with the second mode network device according to the connection setup parameter.

With reference to the first aspect, in a first implementation manner of the first aspect, the making a redirection decision includes: acquiring load information of the second mode cell, and making the redirection decision according to the load information of the second mode cell.

With reference to the first implementation manner of the first aspect, in a second implementation manner of the first aspect, the making a redirection decision includes: when the load of the second mode cell is less than a first threshold, determining to redirect the UE to the second mode cell; or, when a load of the first mode cell is greater than the load of the second mode cell and a difference between the load of the first mode cell and the load of the second mode cell is greater than a second threshold, determining to redirect the UE to the second mode cell.

With reference to the first implementation manner of the first aspect or the second implementation manner of the first aspect, in a third implementation manner of the first aspect, when the connection request message includes service type indication information, and the service type indication information is used for indicating a type of a service initiated by the UE, before the acquiring load information of the second mode cell, the method further includes: acquiring, according to the service type indication information, a type of a service initiated by the UE; and when the type of the service initiated by the UE is a preset service type, acquiring the load information of the second mode cell, and making the redirection decision according to the load information of the second mode cell.

With reference to the first aspect, the connection request message includes service type indication information, said service type indication information is used for indicating service type indication information of a type of a service initiated by the UE, the making a redirection decision is performed from a connectionless state between the UE and the first mode network device, and this making a decision includes: acquiring, according to the service type indication information, a type of a service initiated by the UE; and when the type of the service initiated by the UE is a preset service type, determining to redirect the UE to the second mode cell.

With reference to the first aspect, or the previous implementation manners of the first aspect, in a further possible implementation manner of the first aspect, when there is at least one second mode cell satisfying a condition of the redirection decision, before the sending a notification message to request the second mode network device to allocate a connection setup parameter for the UE, the method further includes: selecting, according to a preset redirection target cell selection condition, a redirection target cell from the second mode cell satisfying the condition of the redirection decision; and when the redirection target cell is selected successfully, sending the notification message to request the second mode network device to allocate the connection setup parameter for the UE.

With reference to the preceding implementation manner of the first aspect, in a further possible implementation manner of the first aspect, when the connection request message includes measurement information of the second mode cell that is measured by the UE, the selecting, according to a preset redirection target cell selection condition, a redirection target cell from the second mode cell satisfying the condition of the redirection decision includes: acquiring the measurement information of the second mode cell measured by the UE; and when measurement information of at least one cell in the at least one second mode cell satisfying the condition of the redirection decision satisfies a preset condition, selecting one cell from the at least one cell satisfying the preset condition as the redirection target cell.

With reference to the first aspect, or the previous implementation manners of the first aspect, in a further possible implementation manner of the first aspect, when the connection request message includes a connection redirection flag bit used for indicating whether the UE supports inter-system connection redirection, before the making a redirection decision, the method further includes: acquiring the connection redirection flag bit; and when the connection redirection flag bit indicates that the UE supports inter-system connection redirection, making the redirection decision.

In a second aspect not presently claimed, the present invention provides a method for inter-system air interface connection redirection, including: receiving, by a second mode network device, a notification message sent by a first mode network device, and allocating a connection setup parameter for a user equipment UE; and after allocating the connection setup parameter for the UE successfully, sending, by the second mode network device, to the first mode network device, a response message carrying the connection setup parameter, so that the first mode network device sends the connection setup parameter to the UE.

With reference to the second aspect, in a first implementation manner of the second aspect, when the notification message includes a second mode cell the notification message includes measurement information of a second mode cell, after the second mode network device receives the notification message of the first mode network device, the method further includes: acquiring the measurement information of the second mode cell, and selecting a redirection target cell according to the measurement information of the second mode cell.

In a third aspect not presently claimed, the present invention provides a method for inter-system air interface connection redirection, including: sending, by a user equipment UE, a connection request message to a first mode network device through a first mode cell; receiving, by the UE, a connection setup message sent by the first mode network device, where the connection setup message carries a connection setup parameter allocated by a second mode network device for the UE; and setting up, by the UE, a connection with the second mode network device according to the connection setup parameter.

In a fourth aspect, the present invention provides a first mode network device for inter-system air interface connection redirection, including: a receiving unit, configured to receive a connection request message sent by a user equipment UE through a first mode cell; a redirection decision unit, configured to make a redirection decision after the receiving unit receives the connection request message; a sending unit, configured to, after the redirection decision unit determines to redirect the UE to a second mode cell managed by a second mode network device, send a notification message to request the second mode network device to allocate a connection setup parameter for the UE; and a forwarding unit, configured to receive a response message carrying the connection setup parameter sent by the second mode network device, and send the connection setup parameter to the UE, so that the UE sets up a connection with the second mode network device according to the connection setup parameter.

With reference to the fourth aspect, in a first implementation manner of the fourth aspect, the redirection decision unit is further configured to: acquire load information of the second mode cell, and make the redirection decision according to the load information of the second mode cell; and when a load of the second mode cell is less than a first threshold, determine to redirect the UE to the second mode cell; or, when a load of the first mode cell is greater than a load of the second mode cell and a difference between the load of the first mode cell and the load of the second mode cell is greater than a second threshold, determine to redirect the UE to the second mode cell.

With reference to the fourth aspect, the connection request message includes service type indication information used for indicating a type of a service initiated by the UE, and the redirection decision unit is further configured to make the decision from a connectionless state between the UE and the first mode network device, as well as to: acquire, according to the service type indication information, a type of a service initiated by the UE; and when the type of the service initiated by the UE is a preset service type, acquire the load information of the second mode cell, and make the redirection decision according to the load information of the second mode cell.

With reference to the fourth aspect, or the first implementation manner of the fourth aspect, in a further possible implementation manner of the fourth aspect, when the connection request message includes service type indication information used for indicating a type of a service initiated by the UE, the redirection decision unit is further configured to: acquire, according to the service type indication information, a type of a service initiated by the UE; and when the type of the service initiated by the UE is a preset service type, determine to redirect the UE to the second mode cell.

With reference to the fourth aspect, or the previous implementation manners of the fourth aspect, in a further possible implementation manner of the fourth aspect, when there is at least one second mode cell satisfying a condition of the redirection decision, the redirection decision unit is further configured to: select, according to a preset redirection target cell selection condition, a redirection target cell from the second mode cell satisfying the condition of the redirection decision; and when the redirection target cell is selected successfully, notify the sending unit to send the notification message to request the second mode network device to allocate the connection setup parameter for the UE.

With reference to the fourth aspect or the preceding implementation manner of the fourth aspect, in a further possible implementation manner of the fourth aspect, when the connection request message includes measurement information of the second mode cell measured by the UE, the redirection decision unit is further configured to: acquire the measurement information of the second mode cell measured by the UE; and when measurement information of at least one cell in the at least one second mode cell satisfying the condition of the redirection decision satisfies a preset condition, select one cell from the at least one cell satisfying the preset condition as the redirection target cell, and notify the sending unit to send the notification message.

With reference to the fourth aspect, or the previous implementation manners of the fourth aspect, in a further possible implementation manner of the fourth aspect, when the connection request message includes a connection redirection flag bit used for indicating whether the UE supports inter-system connection redirection, the first mode network device further includes: a UE supporting capability determining unit, configured to acquire the connection redirection flag bit from the connection request message received by the receiving unit, and when the connection redirection flag bit indicates that the UE supports inter-system connection redirection, notify the redirection decision unit to make the redirection decision.

In a fifth aspect not presently claimed, the present invention provides a second mode network device for inter-system air interface connection redirection, including: a receiving unit, configured to receive a notification message sent by a first mode network device; an allocating unit, configured to allocate a connection setup parameter for a user equipment UE after the receiving unit receives the notification message; and a sending unit, configured to, after the allocating unit allocates the connection setup parameter for the UE successfully, send, to the first mode network device, a response message carrying the connection setup parameter, so that the first mode network device sends the connection setup parameter to the UE.

With reference to the fifth aspect, in a first implementation manner of the fifth aspect, when the notification message includes measurement information of a second mode cell, the second mode network device further includes: an acquiring unit, configured to acquire the measurement information of the second mode cell from the notification message received by the receiving unit; and a selecting unit, configured to select a redirection target cell according to the measurement information of the second mode cell acquired by the acquiring unit, and after the redirection target cell is selected, notify the allocating unit to allocate, in the selected redirection target cell, the connection setup parameter for the UE.

In a sixth aspect not presently claimed, the present invention provides a user equipment for inter-system air interface connection redirection, including: a sending unit, configured to send, in a first mode cell, a connection request message to a first mode network device; a receiving unit, configured to receive a connection setup message sent by the first mode network device, where the connection setup message carries a connection setup parameter allocated by a second mode network device for the UE; and a connection setup unit, configured to acquire the connection setup parameter from the connection setup message received by the receiving unit, and set up a connection with the second mode network device according to the connection setup parameter.

With reference to the sixth aspect, in a first implementation manner of the sixth aspect, the user equipment further includes: a measuring unit, configured to measure measurement information of a second mode cell, and send the measurement information to the sending unit, so that the sending unit sends the measurement information to the first mode network device through the connection request message.

In a seventh aspect not presently claimed, the present invention provides a first mode network device for inter-system air interface connection redirection, and the first mode network device includes: a receiver, a processor, and a transmitter, where the receiver is configured to receive a connection request message sent by a user equipment UE through a first mode cell; the processor is configured to make a redirection decision after the receiver receives the connection request message; the transmitter is configured to, after the processor determines to redirect the UE to a second mode cell managed by a second mode network device, send a notification message to request the second mode network device to allocate a connection setup parameter for the UE; the receiver is further configured to receive a response message carrying the connection setup parameter sent by the second mode network device; and the transmitter is further configured to send the connection setup parameter to the UE, so that the UE sets up a connection with the second mode network device according to the connection setup parameter.

With reference to the seventh aspect, in a first implementation manner of the seventh aspect, the processor is further configured to: acquire load information of the second mode cell, and make the redirection decision according to the load information of the second mode cell; and when a load of the second mode cell is less than a first threshold, determine to redirect the UE to the second mode cell; or, when a load of a first mode cell is greater than a load of the second mode cell and a difference between the load of the first mode cell and the load of the second mode cell is greater than a second threshold, determine to redirect the UE to the second mode cell.

With reference to the seventh aspect, in a second implementation manner of the seventh aspect, when the connection request message includes service type indication information used for indicating a type of a service initiated by the UE, the processor is further configured to: acquire, according to the service type indication information, a type of a service initiated by the UE; and when the type of the service initiated by the UE is a preset service type, determine to redirect the UE to the second mode cell.

With reference to the seventh aspect, or the first implementation manner of the seventh aspect, or the second implementation manner of the seventh aspect, in a third implementation manner of the seventh aspect, when there is at least one second mode cell satisfying a condition of the redirection decision, the processor is further configured to: select, according to a preset redirection target cell selection condition, a redirection target cell from the second mode cell satisfying the condition of the redirection decision; and when the redirection target cell is selected successfully, send the notification message to request the second mode network device to allocate the connection setup parameter for the UE.

With reference to the third implementation manner of the seventh aspect, in a fourth implementation manner of the seventh aspect, when the connection request message includes measurement information of the second mode cell measured by the UE, the processor is further configured to: acquire the measurement information of the second mode cell measured by the UE; and when measurement information of at least one cell in the at least one second mode cell satisfying the condition of the redirection decision satisfies a preset condition, select one cell from the at least one cell satisfying the preset condition as the redirection target cell, and send the notification message.

With reference to the seventh aspect, or the first implementation manner of the seventh aspect, or the second implementation manner of the seventh aspect, or the third implementation manner or the fourth implementation manner of the seventh aspect, in a fifth implementation manner of the seventh aspect, when the connection request message includes a connection redirection flag bit used for indicating whether the UE supports inter-system connection redirection, the processor is further configured to acquire the connection redirection flag bit from the connection request message, and when the connection redirection flag bit indicates that the UE supports inter-system connection redirection, make the redirection decision.

In an eighth aspect not presently claimed, the present invention provides a second mode network device for inter-system air interface connection redirection, and the second mode network device includes: a receiver, a processor, and a transmitter, where the receiver is configured to receive a notification message sent by a first mode network device; the processor is configured to allocate a connection setup parameter for a user equipment UE after the receiver receives the notification message; and the transmitter is configured to, after the processor allocates the connection setup parameter for the UE successfully, send, to the first mode network device, a response message carrying the connection setup parameter, so that the first mode network device sends the connection setup parameter to the UE.

With reference to the eighth aspect, in a first implementation manner of the eighth aspect, when the notification message includes measurement information of a second mode cell, the processor is further configured to: acquire the measurement information of the second mode cell from the notification message received by the receiver; and select a redirection target cell according to the acquired measurement information of the second mode cell, and after the redirection target cell is selected, allocate, in the selected redirection target cell, the connection setup parameter for the UE.

In a ninth aspect not presently claimed, the present invention provides a user equipment for inter-system air interface connection redirection, and the user equipment includes: a transmitter, a receiver, and a processor, where the transmitter is configured to send a connection request message to a first mode network device through a first mode cell; the receiver is configured to receive the connection setup message sent by the first mode network device, where the connection setup message carries a connection setup parameter allocated by a second mode network device for the UE; and the processor is configured to acquire the connection setup parameter from the connection setup message received by the receiver, and set up a connection with the second mode network device according to the connection setup parameter.

With reference to the ninth aspect, in a first implementation manner of the ninth aspect, the receiver is further configured to receive a downlink signal of a second mode cell, and the processor is further configured to acquire measurement information of the second mode cell according to the downlink signal, and store the measurement information in the connection request message and send the connection request message to the first mode network device through the transmitter.

It can be seen from the foregoing technical solutions that, by adopting the embodiments of the present invention, a first mode network device makes a redirection decision after receiving a connection request message sent by a UE, and when it is determined to redirect the UE to a second mode cell, notifies a second mode network device to allocate a connection setup parameter for the UE, notifies the UE of the connection setup parameter fed back by the second mode network device, so that the UE sets up a connection with the second mode network device according to the connection setup parameter, thereby reducing signaling interaction between systems and between a system and a UE, saving a signaling overhead, shortening a connection setup delay, and improving user experience.

### BRIEF DESCRIPTION OF DRAWINGS

To describe the technical solutions in the embodiments of the present invention more clearly, the following briefly introduces the accompanying drawings required for describing the embodiments. Apparently, the accompanying drawings in the following description show some embodiments of the present invention, and persons of ordinary skill in the art may still derive other drawings from these accompanying drawings without creative efforts.
FIG. 1 is a flowchart of a method for inter-system air interface connection redirection according to an embodiment of the present invention;
FIG. 2 is a flowchart of another method for inter-system air interface connection redirection according to an embodiment of the present invention;
FIG. 3 is a flowchart of another method for inter-system air interface connection redirection according to an embodiment of the present invention;
FIG. 4 is a schematic structural diagram of a first mode network device for inter-system air interface connection redirection according to an embodiment of the present invention;
FIG. 5 is a schematic structural diagram of another first mode network device for inter-system air interface connection redirection according to an embodiment of the present invention;
FIG. 6 is a schematic structural diagram of a second mode network device for inter-system air interface connection redirection according to an embodiment of the present invention;
FIG. 7 is a schematic structural diagram of another second mode network device for inter-system air interface connection redirection according to an embodiment of the present invention;
FIG. 8 is a schematic structural diagram of a user equipment for inter-system air interface connection redirection according to an embodiment of the present invention;
FIG. 9 is a schematic structural diagram of another user equipment for inter-system air interface connection redirection according to an embodiment of the present invention;
FIG. 10 is a schematic structural diagram of a system for inter-system air interface connection redirection according to an embodiment of the present invention;
FIG. 11 is a schematic structural diagram of a first network device for inter-system air interface connection redirection according to an embodiment of the present invention;
FIG. 12 is a schematic structural diagram of a second network device for inter-system air interface connection redirection according to an embodiment of the present invention; and
FIG. 13 is a schematic structural diagram of a user equipment for inter-system air interface connection redirection according to an embodiment of the present invention.

### DESCRIPTION OF EMBODIMENTS

The following clearly and completely describes the technical solutions in the embodiments of the present invention with reference to the accompanying drawings in the embodiments of the present invention. Apparently, the embodiments to be described are merely a part rather than all of the embodiments of the present invention. All other embodiments obtained by persons of ordinary skill in the art based on the embodiments of the present invention without creative efforts shall fall within the protection scope of the present invention.

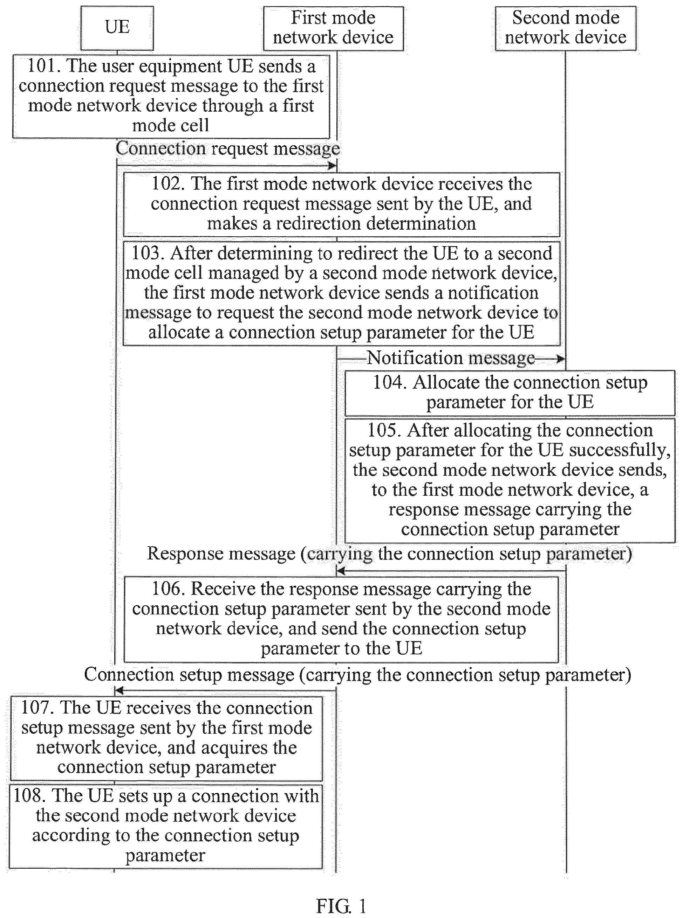

As shown in FIG. 1, an embodiment of the present invention provides a method for inter-system air interface connection redirection, which is specifically described as follows.

101: A user equipment UE sends a connection request message to a first mode network device through a first mode cell.

The connection request message may include at least one of: service type indication information, measurement information of a second mode cell, and a connection redirection flag bit, where the service type indication information is used for indicating a type of a service initiated by the UE, and the connection redirection flag bit is used for indicating whether the UE supports inter-system connection redirection.

The second mode cell and the first mode cell belong to different mode systems, and the two have partially or totally the same coverage area, which may be acquired according to configuration information, for example, may be acquired through configured neighboring cell information, or may be acquired through a preset cell coverage relationship table.

102: The first mode network device receives the connection request message sent by the UE through the first mode cell, and makes a redirection decision.

The first mode network device may be a base station, or may be a base station controller, for example, may be an evolved base station (Evolution NodeB, eNB for short) in an LTE system, or may be a radio network controller (Radio Network Controller, RNC for short) in a UMTS system, which is not limited herein.

For the redirection decision, specifically, the decision may be made according to a type of a service initiated by the UE and/or load information of the second mode cell and made when the first mode network device receives the connection request message, so that a connection processing process of the UE and the first mode network device is not performed, which can reduce a delay caused by redirection.

103: After determining to redirect the UE to a second mode cell managed by a second mode network device, the first mode network device sends a notification message to request the second mode network device to allocate a connection setup parameter for the UE.

The second mode network device and the first mode network device belong to different mode systems, for example, when the first mode network device is an RNC in a UMTS system, the second mode network device may be an eNB in an LTE system, or may be a base station controller in a GSM system; and when the first mode network device is a base station in an LTE system, the second mode network device may be an RNC in a UMTS system.

The notification message is used to request the second mode network device to allocate the connection setup parameter for the UE; the notification message may include a redirection target cell, or a second mode cell satisfying a condition of the redirection decision; when the connection request message includes measurement information of the second mode cell, the notification message may further include the measurement information of the second mode cell; and the notification message may be transmitted through an inter-system standard interface, for example, a direct interface may be established between an eNB and an RNC, or for an eNB and an RNC sharing a site address, transmission may be performed by adopting an internal interface.

The connection setup parameter includes channel resource information, and may further include a UE temporary identifier, a discontinuous reception (Discontinuous Reception, DRX for short) periodical coefficient, signaling bearer setup information, and the like; and the UE temporary identifier refers to an identifier allocated by the second mode network device for the UE, for example, a radio network temporary identifier (radio network temporary identifier, RNTI).

For a related description of the second mode cell, reference is made to step 101.

Optionally, when there is at least one second mode cell satisfying the condition of the redirection decision, before the sending a notification message, the method further includes:
selecting, according to a preset redirection target cell selection condition, a redirection target cell from the at least one second mode cell satisfying the condition of the redirection decision; and
when the redirection target cell is selected successfully, sending the notification message to request the second mode network device to allocate the connection setup parameter for the UE.

When it is determined, according to a type of a service initiated by the UE, to perform redirection processing, the second mode cell satisfying the condition of the redirection decision refers to the second mode cell; and when it is determined, according to load information of the second mode cell, to perform redirection processing, the at least one second mode cell satisfying the condition of the redirection decision refers to a second mode cell satisfying a condition of a load redirection decision.

The preset redirection target cell selection condition may be a load or frequency information or may be selected randomly, or a combination of the above selection conditions , for example, a cell with a minimum load is selected as a redirection target cell; in addition, when the connection request message in step 101 includes the measurement information of the second mode cell, the preset redirection target cell selection condition may be the measurement information of the second mode cell.

104: The second mode network device receives the notification message sent by the first mode network device, and allocates the connection setup parameter for the UE.

The allocating the connection setup parameter for the UE includes: acquiring a redirection target cell; and allocating, in the redirection target cell, the connection setup parameter for the UE.

The redirection target cell may be acquired according to information carried in the notification message, or may be acquired according to a source of the notification message, for example, when the first mode network device has only one cell and when the second mode network device receives the notification message sent by the first mode network device, the redirection target cell may be acquired according to a preset cell coverage relationship.

105: After allocating the connection setup parameter for the UE successfully, the second mode network device sends, to the first mode network device, a response message carrying the connection setup parameter.

The response message is used to send, to the first mode network device, the connection setup parameter allocated by the second mode network device, so that the first mode network device sends the connection setup parameter to the UE, and further, the UE sets up a connection with the second mode network device according to the connection setup parameter.

The response message may be transmitted through an inter-system standard interface, and for a specific description, reference is made to a related description of the notification message in step 103.

106: The first mode network device receives the response message carrying the connection setup parameter sent by the second mode network device, and sends the connection setup parameter to the UE.

The connection setup parameter may be sent to the UE through an existing connection setup message, so that the UE sets up a connection with the second mode network device according to the connection setup parameter.

107: The UE receives the connection setup message sent by the first mode network device, and acquires the connection setup parameter.

108: The UE sets up a connection with the second mode network device according to the connection setup parameter.

In this embodiment, after receiving a connection request message sent by a UE, a first mode network device makes a redirection decision immediately, thereby omitting a connection setup procedure between the UE and the first mode network device; and meanwhile, after it is determined, according to the redirection decision, to perform redirection processing on the UE, a notification message is sent to trigger a second mode network device to allocate, in a redirection target cell, a connection setup parameter for the UE, so that the UE can directly connect to the second mode network device according to the allocated connection setup parameter without the need of re-selecting a second mode cell, thereby effectively reducing signaling interaction between the first mode network device and the UE and between the second mode network device and the UE, saving a signaling overhead, shortening a connection setup delay, and improving user experience.

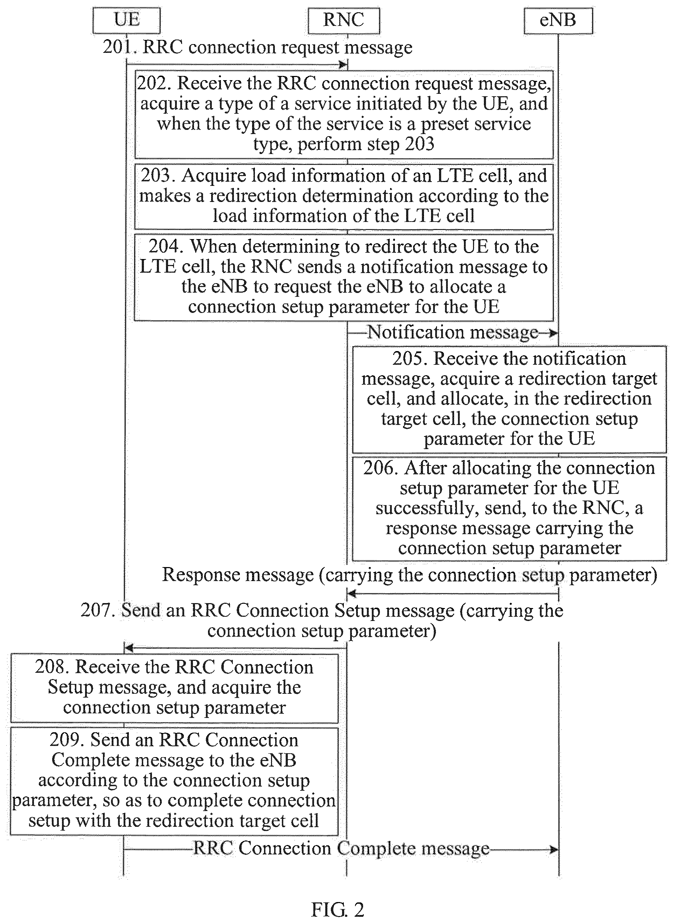

As shown in FIG. 2, an embodiment of the present invention provides a method for inter-system air interface connection redirection, which is specifically described as follows by using that a UE is redirected from a UMTS system to an LTE system as an example, that is, a first mode network device is an RNC, a second mode network device is an eNB, a first mode cell is a UMTS cell, and a second mode cell is an LTE cell.

201: A UE initiates a service in a UMTS cell, and sends a radio resource control (Radio Resource Control, RRC for short) connection request message to an RNC.

The connection request message includes service type indication information; and the service type indication information is used for indicating a type of a service initiated by the UE, which may be a CS service, a packet switched (packet switched, PS for short) service, or may be a short message, a fax, or the like.

202: The RNC receives the RRC connection request message, acquires a type of the service initiated by the UE, and when the type of the service initiated by the UE is a preset service type, performs step 203.

The preset service type refers to a service type that is not provided by the RNC, and may include one or more service types, which may be specifically acquired through configuration information, or may be preset inside the RNC. For example, assuming that it is set that the RNC does not provide a PS service, when the type of the service initiated by the UE is a PS service, step 203 is performed.

It should be noted that, when the first mode cell and the second mode cell do not have a limit on a provided service type, determination for the service type may be omitted, and step 203 is performed directly. If the second mode cell has a service limit, acquiring a service type limited by the second mode cell may be added in step 202, and when the type of the service initiated by the UE belongs to a service type limited by the first mode cell and the type of the service initiated by the UE does not belong to the service type limited by the second mode cell, step 203 is performed. The service type limited by the second mode cell may be acquired by sending a message or according to preset configuration information.

203: The RNC acquires load information of an LTE cell, and makes a redirection decision according to the load information of the LTE cell.

The RNC may acquire the load information of the LTE cell through a network management center; or may implement real time interaction of the load information through signaling interaction with an eNB, for example, in the prior art, the RNC and the eNB implement real time interaction of the load information by forwarding a load request message and a load report message through a core network.

The LTE cell may be acquired through configuration information, for example, may be acquired through configured neighboring cell information, or may also be acquired by querying a pre-stored cell coverage relationship table, which is not limited herein. It should be noted that, in order to ensure that after being redirected from the first mode cell to the second mode cell, the UE keeps continuity of a service and quality of the service, a coverage area of the LTE cell may be the same as a coverage area of the UMTS cell, that is, they cover the same area, or a coverage area of the LTE cell includes a coverage area of the UMTS cell.

The making a redirection decision according to the load information of the LTE cell may specifically adopt the following two manners:
Manner 1: When a load of the LTE cell is less than a first threshold, determine to redirect the UE to the LTE cell.
Manner 2: When a load of the UMTS cell is greater than a load of the LTE cell and a difference between the load of the UMTS cell and the load of the LTE cell is greater than a second threshold, determine to redirect the UE to the LTE cell.

The first threshold and the second threshold may be configured according to a load situation or a user requirement; and the load may be traffic of a PS service, or may be a sum of traffic of a PS service and traffic of a CS service, which is not limited herein.

For example, it is assumed that the load of the UMTS cell is 3 Erlangs, the load of the LTE cell is 1 Erlang, the second threshold is 1 Erlang, and the difference is 2 Erlangs, and therefore, the difference is greater than the second threshold, and it is determined to redirect the UE to the LTE cell.

204: When determining to redirect the UE to the LTE cell, the RNC sends a notification message to the eNB to request the eNB to allocate a connection setup parameter for the UE.

When there is at least one LTE cell satisfying a condition of the redirection decision, before the sending a notification message to the eNB, the method further includes:
selecting, according to a preset redirection target cell selection condition, a redirection target cell from the at least one LTE cell satisfying the condition of the redirection decision; and
when the redirection target cell is selected successfully, sending the notification message to the eNB.

When the connection request message in step 201 further includes measurement information of the LTE cell that is measured by the UE, the selecting, according to a preset redirection target cell selection condition, a redirection target cell from the at least one LTE cell satisfying the condition of the redirection decision includes:
acquiring the measurement information of the LTE cell that is measured by the UE; and
when measurement information of at least one cell in the at least one LTE cell satisfying the condition of the redirection decision satisfies a preset condition, selecting one cell from the at least one cell satisfying the preset condition as the redirection target cell; or
when no measurement information of the at least one LTE cell satisfying the condition of the redirection decision satisfies the preset condition, failing to select the redirection target cell.

For a related description of the connection setup parameter, reference is made to step 102; and for a related description of the notification message, reference is made to step 103, and the notification message includes the redirection target cell.

205: The eNB receives the notification message, acquires the redirection target cell, and allocates, in the redirection target cell, the connection setup parameter for the UE.

For a related description of the connection setup parameter, reference is made to step 104.

206: After allocating the connection setup parameter for the UE successfully, the eNB sends, to the RNC, a response message carrying the connection setup parameter.

For a related description of the response message, reference may be made to step 105.

It should be noted that, when the eNB fails to allocate, in the redirection target cell, the connection setup parameter, the eNB may send a message to notify the RNC that connection setup parameter allocation fails, or may not send any message to notify the RNC, which is not limited herein.

207: The RNC receives the response message, and sends an RRC connection setup (RRC Connection Setup) message to the UE, where the RRC Connection Setup message carries the connection setup parameter.

208: The UE receives the RRC Connection Setup message, and acquires the connection setup parameter.

209: The UE sends an RRC connection complete (RRC Connection Complete) message to the eNB according to the connection setup parameter, so as to complete connection setup with the redirection target cell.

In an implementation scenario, in step 202, when the RRC connection request message further includes an inter-system connection redirection flag bit used for indicating whether the UE supports inter-system connection redirection, the method further includes:
determining, by the RNC, the inter-system connection redirection flag bit, and when the inter-system connection redirection flag bit indicates that the UE supports inter-system connection redirection, performing step 203. A capability of the UE is determined directly after the RRC connection request message of the UE is received, so that excessive signaling interaction can be avoided and a signaling overhead can be saved.

In another implementation scenario, in a remote area or an area with small population density, traffic is relatively low, and a problem of overload does not exist; therefore, in step 202, when the type of the service initiated by the UE belongs to a service type that is not provided by the RNC, the RNC determines to perform redirection processing on the UE, directly performs step 204, and cancels determination for a load, thereby saving signaling interaction between systems, further shortening redirection decision time, reducing a call delay, and improving user experience.

In this embodiment, after receiving a connection request message sent by a UE, a first mode network device makes a redirection decision immediately, thereby omitting a connection setup procedure between the UE and the first mode network device; and meanwhile, after it is determined, according to the redirection decision, to perform redirection processing on the UE, a notification message is sent to trigger a second mode network device to allocate, in a redirection target cell, a connection setup parameter for the UE, so that the UE can directly connect to the second mode network device according to the allocated connection setup parameter without the need of re-selecting a second mode cell, thereby effectively reducing signaling interaction between the first mode network device and the UE and between the second mode network device and the UE, saving a signaling overhead, shortening a connection setup delay, and improving user experience. In addition, the first mode network device makes the redirection decision according to load information of the second mode cell, thereby avoiding a call failure due to a load problem, and playing a load sharing role.

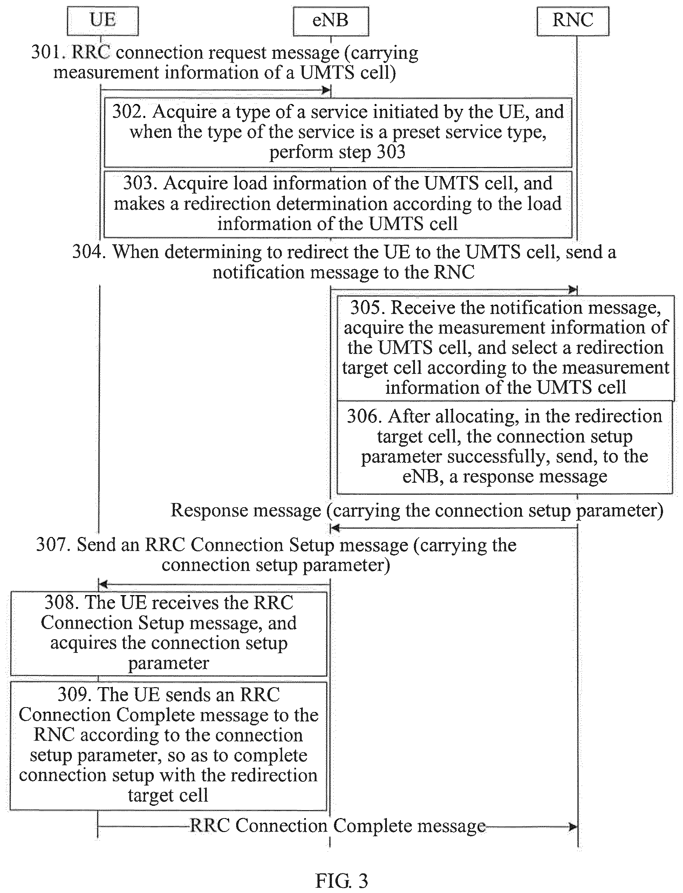

As shown in FIG. 3, an embodiment of the present invention provides a method for inter-system air interface connection redirection, which is specifically described as follows by using that a UE is redirected from an LTE system to a UMTS system as an example, that is, a first mode network device is an eNB, a second mode network device is an RNC, a first mode cell is an LTE cell, and a second mode cell is a UMTS cell.

301: A UE initiates a service in an LTE cell, and sends an RRC connection request message to an eNB, where the RRC connection request message carries measurement information of a UMTS cell that is measured by the UE.

The description of the UMTS cell is consistent with the related description of the second mode cell in step 101; and the measurement information of the UMTS cell may include signal intensity and/or signal quality of the UMTS cell that is measured by the UE.

302: The eNB receives the RRC connection request message, acquires a type of the service initiated by the UE, and when the type of the service is a preset service type, performs step 303.

The preset service type may be a service type that is not provided by the eNB, and for a related description, reference is made to step 202.

It should be noted that, step 302 is optional, and when the LTE cell and the UMTS cell do not have a limit on a provided service type, a limit on the service type may be eliminated, and step 303 is performed directly. For a related description of the second mode cell having a service limit, reference is made to step 202.

303: The eNB acquires load information of the UMTS cell, and makes a redirection decision according to the load information of the UMTS cell.

It should be noted that, the eNB may acquire the load information of the UMTS cell through a network management center; or may implement real time interaction of the load information through signaling interaction between an RNC and the eNB.

The making a redirection decision according to the load information of the UMTS cell, that is, making a redirection decision according to the load information of the second mode cell, may specifically adopt the following two manners:
Manner 1: When a load of the second mode cell is less than a first threshold, determine to redirect the UE to the second mode cell.
Manner 2: When a load of the first mode cell is greater than a load of the second mode cell and a difference between the load of the first mode cell and the load of the second mode cell is greater than a second threshold, determine to redirect the UE to the second mode cell.

The first threshold and the second threshold may be configured according to a load situation or a user requirement; and the load may be traffic of a PS service, or may be a sum of traffic of a PS service and traffic of a CS service, which is not limited herein.

304: When determining to redirect the UE to the UMTS cell, the eNB sends a notification message to the RNC to request the RNC to allocate a connection setup parameter for the UE.

The notification message includes the measurement information of the UMTS cell that is measured by the UE, and may further include a UMTS cell satisfying a condition of the redirection decision; and for a related description of the at least one second mode cell satisfying the condition of the redirection decision, reference is made to step 103.

305: The RNC receives the notification message, acquires the measurement information of the UMTS cell, and selects a redirection target cell according to the measurement information of the UMTS cell.

The selecting a redirection target cell according to the measurement information of the UMTS cell includes:
acquiring the UMTS cell satisfying the condition of the redirection decision;
when measurement information of at least one cell in the UMTS cell satisfying the condition of the redirection decision satisfies a preset condition, selecting one from the at least one cell satisfying the preset condition as a redirection target UMTS cell, and then performing step 304; or
when no measurement information of the UMTS cell satisfying the condition of the redirection decision satisfies the preset condition, allocating no connection setup parameter.

The UMTS cell satisfying the condition of the redirection decision may be acquired according to information carried in the notification message, and the redirection target cell may also be acquired according to a source of the notification message; and the preset condition may be signal intensity or signal quality in the measurement information, or may be a combination of the two, which is not limited herein.

For example, when the preset condition is selecting a cell with maximum signal intensity, select a UMTS cell with maximum signal intensity from the UMTS cell satisfying the condition of the redirection decision, and the cell with maximum signal intensity is the redirection target cell; and when the preset condition is a preset quality threshold, select a cell satisfying the preset quality threshold from the UMTS cell satisfying the condition of the redirection decision, and select one cell from the cell satisfying the preset quality threshold as the redirection target cell.

It should be noted that, when the redirection target cell cannot be selected, according to the measurement information, from the UMTS cell satisfying the condition of the redirection decision, for example, when a situation that signal quality does not satisfy the preset condition, the RNC may send a message to notify the eNB that connection setup parameter allocation fails, or may not send any message to notify the eNB, which is not limited herein. Selecting the redirection target cell according to the measurement information can avoid selecting a cell with a poor signal condition as the redirection target cell, thereby avoiding call quality degradation or even call drop due to the poor signal condition. In addition, selecting the redirection target cell according to the measurement information can further avoid redirecting the UE to a cell that cannot cover a location of the UE, thereby avoiding call drop and improving user experience.

306: After allocating, in the redirection target cell, the connection setup parameter for the UE successfully, the RNC sends, to the eNB, a response message carrying the connection setup parameter.

For a related description of the connection setup parameter, reference is made to step 102; and for a related description of the response message, reference is made to step 105.

It should be noted that, when the RNC fails to allocate, in the redirection target cell, the connection setup parameter, the RNC may send a message to notify the eNB that connection setup parameter allocation fails, or may not send any message to notify the eNB, which is not limited herein.
307: The eNB receives the response message, and sends an RRC Connection Setup message to the UE, where the RRC Connection Setup message carries the connection setup parameter.
308: The UE receives the RRC Connection Setup message, and acquires the connection setup parameter.
309: The UE sends an RRC Connection Complete message to the RNC according to the connection setup parameter, so as to complete connection setup with the redirection target cell.

In an implementation scenario, when the RRC connection request message further includes an inter-system connection redirection flag bit used for indicating whether the UE supports inter-system connection redirection, step 302 in the foregoing further includes:
determining, by the eNB, the inter-system connection redirection flag bit, and when the inter-system connection redirection flag bit indicates that the UE supports inter-system connection redirection, performing step 303.

In the foregoing implementation scenario, after receiving the RRC connection request message sent by the UE, the eNB directly determines an inter-system connection redirection supporting capability of the UE, so that unnecessary signaling interaction between systems can be avoided when the UE does not support inter-system connection redirection, thereby saving a signaling overhead.

In this embodiment, after receiving a connection request message sent by a UE, a first mode network device makes a redirection decision immediately, thereby omitting a connection setup procedure between the UE and the first mode network device and a procedure that the UE re-selects a second mode cell; and meanwhile, the redirection decision is made according to a load, thereby avoiding a call failure due to a load problem and playing a load sharing role. In addition, after it is determined to perform redirection processing on the UE, a redirection target cell is determined according to measurement information, thereby avoiding a poor communications quality or call drop problem caused by problems of coverage or signal quality and signal intensity, and further improving user experience.

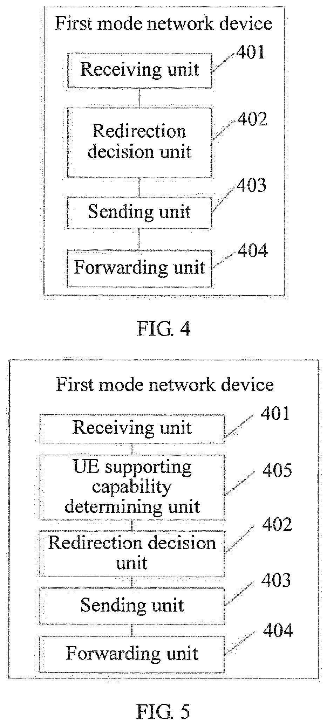

As shown in FIG. 4, an embodiment of the present invention provides a first mode network device for inter-system air interface connection redirection, for example, the first mode network device may be an RNC or an eNB, and includes a receiving unit 401, a redirection decision unit 402, a sending unit 403, and a forwarding unit 404, and may be configured to execute the method embodiment shown in FIG. 1, which is specifically described as follows.

The receiving unit 401 is configured to receive a connection request message sent by a user equipment UE through a first mode cell.

The redirection decision unit 402 is configured to make a redirection decision after the receiving unit 401 receives the connection request message.

The sending unit 403 is configured to, after the redirection decision unit 402 determines to redirect the UE to a second mode cell managed by a second mode network device, send a notification message to request the second mode network device to allocate a connection setup parameter for the UE.

The forwarding unit 404 is configured to receive the connection setup parameter that is allocated by the second mode network device for the UE and is requested by the sending unit 403, and send the connection setup parameter to the UE, so that the UE sets up a connection with the second mode network device according to the connection setup parameter.

The descriptions of the notification message, the connection setup parameter, the second mode cell, and the second mode network device are consistent with the related descriptions in the embodiment shown in FIG. 1.

Optionally, the first mode network device is configured to execute the method embodiment shown in FIG. 2, and the redirection decision unit 402 is further specifically configured to:
acquire load information of the second mode cell, and makes the redirection decision according to the load information of the second mode cell; and
when a load of the second mode cell is less than a first threshold, determine to redirect the UE to the second mode cell; or
when a load of the first mode cell is greater than a load of the second mode cell and a difference between the load of the first mode cell and the load of the second mode cell is greater than a second threshold, determine to redirect the UE to the second mode cell.

For related descriptions of the first threshold, the second threshold, and the load, reference is made to step 203.

Optionally, when there is at least one second mode cell satisfying a condition of the redirection decision, the redirection decision unit 402 is further configured to:
select, according to a preset redirection target cell selection condition, a redirection target cell from the at least one second mode cell satisfying the condition of the redirection decision; and
when the redirection target cell is selected successfully, notify the sending unit to send the notification message to request the second mode network device to allocate the connection setup parameter for the UE.

For a related description of the preset redirection target cell selection condition, reference is made to step 103.

Optionally, when the connection request message includes service type indication information used for indicating a type of a service initiated by the UE, the redirection decision unit 402 is further specifically configured to:
acquire, according to the service type indication information, a type of a service initiated by the UE; and -
when the type of the service initiated by the UE is a preset service type, acquire the load information of the second mode cell, and make the redirection decision according to the load information of the second mode cell.

Optionally, when the connection request message includes service type indication information used for indicating a type of a service initiated by the UE, the redirection decision unit 402 is further specifically configured to:
acquire, according to the service type indication information, a type of a service initiated by the UE; and
when the type of the service initiated by the UE is a preset service type, determine to redirect the UE to the second mode cell.

For a related description of the service type indication information, reference is made to step 101; and for a related description of the preset service type, reference is made to step 202.

Optionally, when the connection request message includes measurement information of the second mode cell measured by the UE, the redirection decision unit 402 is further specifically configured to:
acquire the measurement information of the second mode cell measured by the UE; and
when measurement information of at least one cell in the at least one second mode cell satisfying the condition of the redirection decision satisfies a preset condition, select one cell from the at least one cell satisfying the preset condition as the redirection target cell, and notify the sending unit 403 to send the notification message; or
when no measurement information of the at least one second mode cell satisfying the condition of the redirection decision satisfies the preset condition, fail to select the redirection target cell, and perform no redirection processing.

Optionally, as shown in FIG. 5, when the connection request message includes a connection redirection flag bit used for indicating whether the UE supports inter-system connection redirection, the first mode network device further includes:
a UE supporting capability determining unit 405, configured to acquire the connection redirection flag bit from the connection request message received by the receiving unit 401, and when the connection redirection flag bit indicates that the UE supports inter-system connection redirection, notify the redirection decision unit 402 to make the redirection decision.

In this embodiment, after receiving a connection request message sent by a UE, a first mode network device makes a redirection decision immediately, thereby omitting a connection setup procedure between the UE and the first mode network device; and meanwhile, after it is determined, according to the redirection decision, to perform redirection processing on the UE, a notification message is sent to trigger a second mode network device to allocate, in a redirection target cell, a connection setup parameter for the UE, so that the UE can directly connect to the second mode network device according to the allocated connection setup parameter without the need of re-selecting a second mode cell, thereby effectively reducing signaling interaction between the first mode network device and the UE and between the second mode network device and the UE, saving a signaling overhead, shortening a connection setup delay, and improving user experience.

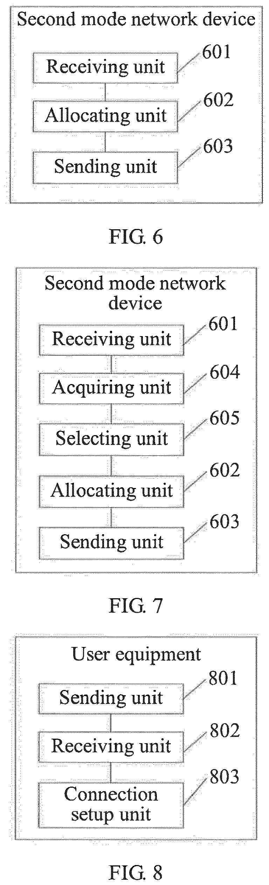

As shown in FIG. 6, an embodiment of the present invention provides a second mode network device for inter-system air interface connection redirection, for example, the second mode network device may be an RNC or an eNB, or may be a base station controller (base station controller, BSC for short), includes a receiving unit 601, an allocating unit 602, a sending unit 603, and corresponds to the method embodiment shown in FIG. 1, which is specifically described as follows.

The receiving unit 601 is configured to receive a notification message sent by a first mode network device.

The allocating unit 602 is configured to allocate a connection setup parameter for a user equipment UE after the receiving unit 601 receives the notification message.

The sending unit 603 is configured to, after the allocating unit 602 allocates the connection setup parameter for the UE successfully, send, to the first mode network device, a response message carrying the connection setup parameter, so that the first mode network device sends the connection setup parameter to the UE.

The descriptions of the first mode network device, the notification message, the response message, and the connection setup parameter are consistent with the related descriptions in the embodiment shown in FIG. 1.

Optionally, as shown in FIG. 7, the second mode network device may be configured to execute the embodiment shown in FIG. 3, and when the notification message includes measurement information of a second mode cell, the second mode network device further includes:
an acquiring unit 604, configured to acquire the measurement information of the second mode cell from the notification message received by the receiving unit 601; and
a selecting unit 605, configured to select a redirection target cell according to the measurement information of the second mode cell acquired by the acquiring unit 604, and after the redirection target cell is selected, notify the allocating unit 602 to allocate, in the redirection target cell, the connection setup parameter for the UE.

In this embodiment, after receiving a notification message, a second mode network device allocates a connection setup parameter for a UE, and after allocating the connection setup parameter successfully, sends, to a first mode network device, a response message carrying the connection setup parameter, so that the first mode network device notifies the UE of the connection setup parameter, thereby reducing signaling interaction between systems and between a system and a UE, saving a signaling overhead, shortening a connection setup delay, and improving user experience.

As shown in FIG. 8, an embodiment of the present invention provides a user equipment for inter-system air interface connection redirection. The user equipment includes a sending unit 801, a receiving unit 802, and a connection setup unit 803, and may be configured to execute the embodiment shown in FIG. 1, which is specifically described as follows.

The sending unit 801 is configured to send a connection request message to a first mode network device through a first mode cell.

The receiving unit 802 is configured to receive the connection setup message sent by the first mode network device, where the connection setup message carries a connection setup parameter allocated by a second mode network device for the UE.

The connection setup unit 803 is configured to acquire the connection setup parameter according to the connection setup message received by the receiving unit 802, and set up a connection with the second mode network device according to the connection setup parameter.

The descriptions of the first mode network device, the second mode network device, the first mode cell, and the connection setup parameter are consistent with the related descriptions in the embodiment shown in FIG. 1.

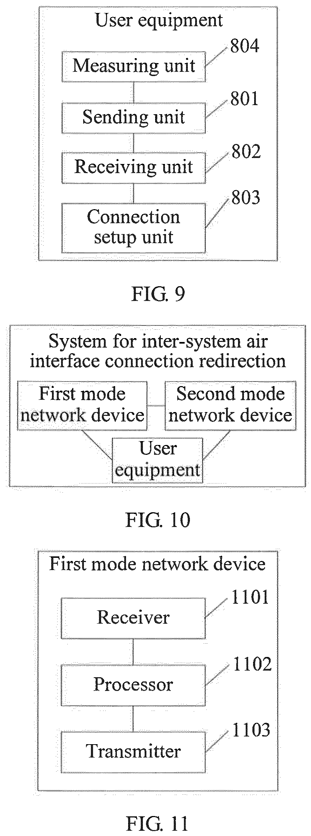

Optionally, as shown in FIG. 9, the user equipment further includes:
a measuring unit 804, configured to measure measurement information of a second mode cell, and send the measurement information to the sending unit 801, so that the sending unit 801 sends the measurement information to the first mode network device through the connection request message.

A related description of the second mode cell is consistent with that in step 101.

In this embodiment, after receiving a connection setup parameter, a user equipment sets up a connection with a second mode network device according to the connection setup parameter, thereby reducing signaling interaction between systems and between a system and a UE, saving a signaling overhead, shortening a connection setup delay, and improving user experience.

As shown in FIG. 10, an embodiment of the present invention provides a system for inter-system air interface connection redirection, and the system includes the first mode network device shown in FIG. 4 or FIG. 5, the second mode network device shown in FIG. 6 or FIG. 7, and the user equipment shown in FIG. 8 or FIG. 9.

As shown in FIG. 11, an embodiment provides a first mode network device for inter-system air interface connection redirection, for example, the first mode network device may be an RNC or an eNB, and includes a receiver 1101, a processor 1102, and a transmitter 1103. The first mode network device may be configured to execute the method embodiment shown in FIG. 1, which is specifically described as follows.

The receiver 1101 is configured to receive a connection request message sent by a user equipment UE through a first mode cell.

The processor 1102 is configured to makes a redirection decision after the receiver 1101 receives the connection request message.

The transmitter 1103 is configured to, after the processor determines to redirect the UE to a second mode cell managed by a second mode network device, send a notification message to request the second mode network device to allocate a connection setup parameter for the UE.

The receiver 1101 is further configured to receive a response message carrying the connection setup parameter sent by the second mode network device.

The transmitter 1103 is further configured to send the connection setup parameter to the UE, so that the UE sets up a connection with the second mode network device according to the connection setup parameter.

The notification message, the second mode cell, the second mode network device, and the connection setup parameter are consistent with the related descriptions in the embodiment shown in FIG. 1.

Optionally, the first mode network device may be configured to execute the method in the embodiment shown in FIG. 2, and the processor 1102 is further configured to:
acquire load information of the second mode cell, and makes the redirection decision according to the load information of the second mode cell; and
when a load of the second mode cell is less than a first threshold, determine to redirect the UE to the second mode cell; or
when a load of the first mode cell is greater than a load of the second mode cell and a difference between the load of the first mode cell and the load of the second mode cell is greater than a second threshold, determine to redirect the UE to the second mode cell.

For related descriptions of the first threshold, the second threshold, and the load, reference is to step 203.

Optionally, when the connection request message includes service type indication information used for indicating a type of a service initiated by the UE, the processor 1102 is further configured to:
acquire, according to the service type indication information, a type of a service initiated by the UE; and
when the type of the service initiated by the UE is a preset service type, determine to redirect the UE to the second mode cell.

For a related description of the service type indication information, reference is made to step 101; and for a related description of the preset service type, reference is made to step 202.

Optionally, when there is at least one second mode cell satisfying a condition of the redirection decision, the processor 1102 is further configured to:
select, according to a preset redirection target cell selection condition, a redirection target cell from the second mode cell satisfying the condition of the redirection decision; and
when the redirection target cell is selected successfully, send the notification message to request the second mode network device to allocate the connection setup parameter for the UE.

For a related description of the preset redirection target cell selection condition, reference is made to step 103.

Optionally, when the connection request message includes measurement information of the second mode cell that is measured by the UE, the processor 1102 is further configured to:
acquire the measurement information of the second mode cell that is measured by the UE; and
when measurement information of at least one cell in the at least one second mode cell satisfies a preset condition, select one cell from the at least one cell satisfying the preset condition as the redirection target cell, and send the notification message; or
when no measurement information of the second mode cell satisfies the preset condition, fail to select the redirection target cell, and perform no redirection processing.

Optionally, when the connection request message includes a connection redirection flag bit used for indicating whether the UE supports inter-system connection redirection, the processor 1102 is further configured to:
acquire the connection redirection flag bit from the connection request message, and when the connection redirection flag bit indicates that the UE supports inter-system connection redirection, make the redirection decision.

In this embodiment, after receiving a connection request message sent by a UE, a first mode network device makes a redirection decision immediately, thereby omitting a connection setup procedure between the UE and the first mode network device; and meanwhile, after it is determined, according to the redirection decision, to perform redirection processing on the UE, a notification message is sent to trigger a second mode network device to allocate, in a redirection target cell, a connection setup parameter for the UE, so that the UE can directly connect to the second mode network device according to the allocated connection setup parameter without the need of re-selecting a second mode cell, thereby effectively reducing signaling interaction between the first mode network device and the UE and between the second mode network device and the UE, saving a signaling overhead, shortening a connection setup delay, and improving user experience.

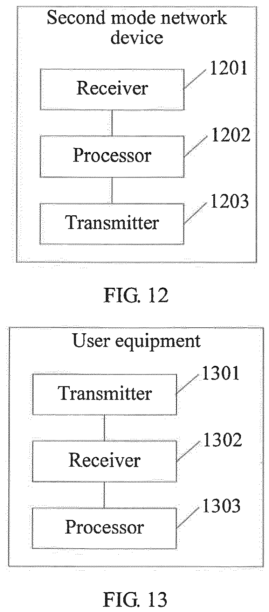

As shown in FIG. 12, an embodiment of the present invention provides a second mode network device for inter-system air interface connection redirection, for example, the second mode network device may be an RNC or an eNB, includes a receiver 1201, a processor 1202, and a transmitter 1203, and may be configured to execute the embodiment shown in FIG. 1, which is specifically described as follows.

The receiver 1201 is configured to receive a notification message sent by a first mode network device.

The processor 1202 is configured to allocate a connection setup parameter for a user equipment UE after the receiver 1201 receives the notification message.

The transmitter 1203 is configured to, after the processor 1202 allocates the connection setup parameter for the UE successfully, send, to the first mode network device, a response message carrying the connection setup parameter, so that the first mode network device sends the connection setup parameter to the UE.

The description of the first mode network device, the notification message, the response message, and the connection setup parameter are consistent with the related descriptions in the embodiment shown in FIG. 1.

Optionally, the second mode network device may be configured to execute the embodiment shown in FIG. 3, and when the notification message includes measurement information of a second mode cell, the processor 1202 is further configured to:
acquire the measurement information of the second mode cell from the notification message received by the receiver; and
select a redirection target cell according to the acquired measurement information of the second mode cell, and after the redirection target cell is selected, allocate, in the selected redirection target cell, the connection setup parameter for the UE.

In this embodiment, after receiving a notification message, a second mode network device allocates a connection setup parameter for a UE, and after allocating the connection setup parameter successfully, sends, to a first mode network device, a response message carrying the connection setup parameter, so that the first mode network device notifies the UE of the connection setup parameter, thereby reducing signaling interaction between systems and between a system and a UE, saving a signaling overhead, shortening a connection setup delay, and improving user experience.

As shown in FIG. 13, an embodiment of the present invention provides a user equipment for inter-system air interface connection redirection, which includes: a transmitter 1301, a receiver 1302, and a processor 1303, may be configured to execute the embodiment shown in FIG. 1, and is specifically described as follows.

The transmitter 1301 is configured to send a connection request message to a first mode network device through a first mode cell.

The receiver 1302 is configured to receive the connection setup message that is sent by the first mode network device and carries a connection setup parameter allocated by a second mode network device for the UE.

The processor 1303 is configured to acquire the connection setup parameter from the connection setup message received by the receiver 1302, and set up a connection with the second mode network device according to the connection setup parameter.

The descriptions of the first mode network device, the second mode network device, the first mode cell, and the connection setup parameter are consistent with the related descriptions in the embodiment shown in FIG. 1.

Optionally, the receiver 1302 is further configured to receive a downlink signal of a second mode cell, and the processor 1303 is further configured to:
acquire measurement information of the second mode cell according to the downlink signal, and store the measurement information in the connection request message and send the connection request message to the first mode network device through the transmitter 1301.

A related description of the second mode cell is consistent with that in step 101.

In this embodiment, after receiving a connection setup parameter, a user equipment sets up a connection with a second mode network device according to the connection setup parameter, thereby reducing signaling interaction between systems and between a system and a UE, saving a signaling overhead, shortening a connection setup delay, and improving user experience.

An embodiment of the present invention provides a system for inter-system air interface connection redirection, where the system includes the first mode network device shown in FIG. 11, the second mode network device shown in FIG. 12, and the user equipment shown in FIG. 13.

Persons of ordinary skill in the art may understand that, all or a part of the steps of the foregoing method embodiments may be implemented by a program instructing relevant hardware. The program may be stored in a computer readable storage medium. When the program runs, the steps of the foregoing method embodiments are performed. The foregoing storage medium includes various mediums capable of storing program code, such as a ROM, a RAM, a magnetic disk, or an optical disc.

Finally, it should be noted that the foregoing embodiments are merely intended for describing the technical solutions of the present invention rather than limiting the present invention. Although the present invention is described in detail with reference to the foregoing embodiments, persons of ordinary skill in the art should understand that they may still make modifications to the technical solutions described in the foregoing embodiments, without departing from the scope of the appended claims.

## Claims

1. A method for inter-system air interface connection redirection, comprising:
receiving (102), by a first mode network device, a connection request message sent by a user equipment, UE, through a first mode cell, and making, by the first mode network device, a redirection decision;
after determining to redirect the UE to a second mode cell managed by a second mode network device, sending (103), by the first mode network device, a notification message to request the second mode network device to allocate a connection setup parameter for the UE; and
receiving (106), by the first mode network device, a response message carrying the connection setup parameter sent by the second mode network device; and
sending (106), by the first mode network device, the connection setup parameter to the UE,
setting up (108), by the UE, a connection with the second mode network device according to the connection setup parameter,
**characterized in that**
the connection request message comprises service type indication information, said service type indication information is used for indicating a type of a service initiated by the UE, and the making a redirection decision is performed from a connectionless state between the UE and the first mode network device and comprises:
acquiring, according to the service type indication information, a type of a service initiated by the UE; and
when the type of the service initiated by the UE is a preset service type, determining to redirect the UE to the second mode cell.

2. The method according to claim 1, wherein the making a redirection decision further comprises:
acquiring (203, 303) load information of the second mode cell; and
making (203, 303) the redirection decision according to the load information of the second mode cell.

3. The method according to claim 2, wherein the step of acquiring load information of the second mode cell is performed after the step of acquiring, according to the service type indication information, the type of service initiated by the UE; such that when the type of the service initiated by the UE is a preset service type, the load information of the second mode cell is acquired and the redirection decision according to the load information of the second mode cell is made.

4. The method according to any one of claims 1 to 3, wherein when there is at least one second mode cell satisfying a condition of the redirection decision, before the sending a notification message to request the second mode network device to allocate a connection setup parameter for the UE, the method further comprises:
selecting, by the first mode network device, according to a preset redirection target cell selection condition, a redirection target cell from the second mode cell satisfying the condition of the redirection decision; and
when the redirection target cell is selected successfully, sending the notification message to request the second mode network device to allocate the connection setup parameter for the UE.

5. The method according to claim 4, wherein when the connection request message comprises measurement information of the second mode cell measured by the UE, the selecting, according to a preset redirection target cell selection condition, a redirection target cell from the second mode cell satisfying the condition of the redirection decision comprises:
acquiring the measurement information of the second mode cell measured by the UE; and
when measurement information of at least one cell in the at least one second mode cell satisfying the condition of the redirection decision satisfies a preset condition, selecting one cell from the at least one cell satisfying the preset condition as the redirection target cell.

6. The method according to any one of claims 1 to 5, wherein when the connection request message comprises a connection redirection flag bit used for indicating whether the UE supports inter-system connection redirection, before the making a redirection decision, the method further comprises:
acquiring, by the first mode network device, the connection redirection flag bit; and
when the connection redirection flag bit indicates that the UE supports inter-system connection redirection, making the redirection decision.

7. A first mode network device for inter-system air interface connection redirection, comprising:
a receiving unit (401), configured to receive a connection request message sent by a user equipment, UE, through a first mode cell;
a redirection decision unit (402), configured to make a redirection decision after the receiving unit receives the connection request message;
a sending unit (403), configured to, after the redirection decision unit determines to redirect the UE to a second mode cell managed by a second mode network device, send a notification message to request the second mode network device to allocate a connection setup parameter for the UE; and
a forwarding unit (404), configured to receive a response message carrying the connection setup parameter sent by the second mode network device, and to send the connection setup parameter to the UE for the UE setting up a connection with the second mode network device according to the connection setup parameter,
**characterized in that**
the connection request message comprises service type indication information used for indicating a type of a service initiated by the UE, and the redirection decision unit is further configured to make a redirection decision from a connectionless state between the UE and the first mode network device, as well as to:
acquire, according to the service type indication information, a type of a service initiated by the UE; and
when the type of the service initiated by the UE is a preset service type, determine to redirect the UE to the second mode cell.

8. The first mode network device according to claim 7, wherein when the connection request message comprises service type indication information used for indicating a type of a service initiated by the UE, the redirection decision unit is further configured to:
acquire, according to the service type indication information, a type of a service initiated by the UE; and
when the type of the service initiated by the UE is a preset service type, acquire the load information of the second mode cell, and make the redirection decision according to the load information of the second mode cell.

9. The first mode network device according to any one of claims 7 to 8, wherein when there is at least one second mode cell satisfying a condition of the redirection decision, the redirection decision unit is further configured to:
select, according to a preset redirection target cell selection condition, a redirection target cell from the second mode cell satisfying the condition of the redirection decision; and
when the redirection target cell is selected successfully, notify the sending unit to send the notification message to request the second mode network device to allocate the connection setup parameter for the UE.

10. The first mode network device according to claim 9, wherein when the connection request message comprises measurement information of the second mode cell that is measured by the UE, the redirection decision unit is further configured to:
acquire the measurement information of the second mode cell measured by the UE; and
when measurement information of at least one cell in the at least one second mode cell satisfying the condition of the redirection decision satisfies a preset condition, select one cell from the at least one cell satisfying the preset condition as the redirection target cell, and notify the sending unit to send the notification message.

11. The first mode network device according to any one of claims 7 to 10, wherein when the connection request message comprises a connection redirection flag bit used for indicating whether the UE supports inter-system connection redirection, the first mode network device further comprises:
a UE supporting capability determining unit, configured to acquire the connection redirection flag bit from the connection request message received by the receiving unit, and when the connection redirection flag bit indicates that the UE supports inter-system connection redirection, notify the redirection decision unit to make the redirection decision.

## Patentansprüche

1. Verfahren zur Intersystem-Luftschnittstellenverbindungsumleitung, das Folgendes umfasst:
Empfangen (102) einer durch ein Benutzerendgerät, UE, über eine Zelle in einem ersten Modus gesendeten Verbindungsanforderungsnachricht durch ein Netzwerkgerät in einem ersten Modus und Treffen einer Umleitungsentscheidung durch das Netzwerkgerät in einem ersten Modus;
nach dem Bestimmen, dass das UE in eine durch ein Netzwerkgerät in einem zweiten Modus verwaltete Zelle in einem zweiten Modus umgeleitet wird, Senden (103) einer Mitteilungsnachricht durch das Netzwerkgerät in einem ersten Modus, um anzufordern, dass das Netzwerkgerät in einem zweiten Modus einen Verbindungsaufbauparameter für das UE zuteilt; und
Empfangen (106) einer Antwortnachricht, die den durch das Netzwerkgerät in einem zweiten Modus gesendeten Verbindungsaufbauparameter übermittelt, durch das Netzwerkgerät in einem ersten Modus; und
Senden (106) des Verbindungsaufbauparameters durch das Netzwerkgerät in einem ersten Modus an das UE,
Aufbauen (108) einer Verbindung zum Netzwerkgerät in einem zweiten Modus durch das UE gemäß dem Verbindungsaufbauparameter,
**dadurch gekennzeichnet, dass**
die Verbindungsanforderungsnachricht Diensttypangabe-Informationen umfasst,
wobei die Diensttypangabe-Informationen genutzt werden, um einen Typ eines durch das UE initiierten Dienstes anzugeben, und das Treffen einer Umleitungsentscheidung aus einem verbindungslosen Zustand zwischen dem UE und
dem Netzwerkgerät in einem ersten Modus durchgeführt wird und Folgendes umfasst:
Erfassen eines Typs eines durch das UE initiierten Dienstes gemäß den Diensttypangabe-Informationen; und,
wenn der Typ des durch das UE initiierten Dienstes ein vorgegebener Diensttyp ist, Bestimmen, dass das UE in die Zelle in einem zweiten Modus umgeleitet wird.

2. Verfahren nach Anspruch 1, wobei das Treffen einer Umleitungsentscheidung ferner Folgendes umfasst:
Erfassen (203, 303) von Lastinformationen der Zelle in einem zweiten Modus; und
Treffen (203, 303) der Umleitungsentscheidung gemäß den Lastinformationen der Zelle in einem zweiten Modus.

3. Verfahren nach Anspruch 2, wobei
der Schritt des Erfassens von Lastinformationen der Zelle in einem zweiten Modus nach dem Schritt des Erfassens des Typs eines durch das UE initiierten Dienstes gemäß den Diensttypangabe-Informationen durchgeführt wird; sodass,
wenn der Typ des durch das UE initiierten Dienstes ein vorgegebener Diensttyp ist, die Lastinformationen der Zelle in einem zweiten Modus erfasst werden und die Umleitungsentscheidung gemäß den Lastinformationen der Zelle in einem zweiten Modus getroffen wird.

4. Verfahren nach einem der Ansprüche 1 bis 3, wobei das Verfahren, wenn mindestens eine Zelle in einem zweiten Modus, die eine Bedingung der Umleitungsentscheidung erfüllt, vorhanden ist, vor dem Senden einer Mitteilungsnachricht, um anzufordern, dass das Netzwerkgerät in einem zweiten Modus einen Verbindungsaufbauparameter für das UE zuteilt, ferner Folgendes umfasst:
Auswählen einer Umleitungszielzelle aus der Zelle in einem zweiten Modus, die die Bedingung der Umleitungsentscheidung erfüllt, durch das Netzwerkgerät in einem ersten Modus gemäß einer vorgegebenen Umleitungszielzellenauswahlbedingung; und,
wenn die Umleitungszielzelle erfolgreich ausgewählt wird, Senden der Mitteilungsnachricht, um anzufordern, dass das Netzwerkgerät in einem zweiten Modus den Verbindungsaufbauparameter für das UE zuteilt.

5. Verfahren nach Anspruch 4, wobei, wenn die Verbindungsanforderungsnachricht durch das UE gemessene Messinformationen der Zelle in einem zweiten Modus umfasst, das Auswählen einer Umleitungszielzelle aus der Zelle in einem zweiten Modus, die die Bedingung der Umleitungsentscheidung erfüllt, gemäß einer vorgegebenen Umleitungszielzellenauswahlbedingung Folgendes umfasst:
Erfassen der durch das UE gemessenen Messinformationen der Zelle in einem zweiten Modus; und,
wenn Messinformationen mindestens einer Zelle in der mindestens einen Zelle in einem zweiten Modus, die die Bedingung der Umleitungsentscheidung erfüllt, eine vorgegebene Bedingung erfüllen, Auswählen einer Zelle aus der mindestens einen Zelle, die die vorgegebene Bedingung erfüllt, als die Umleitungszielzelle.

6. Verfahren nach einem der Ansprüche 1 bis 5, wobei das Verfahren, wenn die Verbindungsanforderungsnachricht ein Verbindungsumleitungskennzeichenbit umfasst, das genutzt wird, um anzugeben, ob das UE die Intersystem-Verbindungsumleitung unterstützt, vor dem Treffen einer Umleitungsentscheidung ferner Folgendes umfasst:
Erfassen des Verbindungsumleitungskennzeichenbits durch das Netzwerkgerät in einem ersten Modus; und,
wenn das Verbindungsumleitungskennzeichenbit angibt, dass das UE die Intersystem-Verbindungsumleitung unterstützt, Treffen der Umleitungsentscheidung.

7. Netzwerkgerät in einem ersten Modus zur Intersystem-Luftschnittstellenverbindungsumleitung, das Folgendes umfasst:
eine Empfangseinheit (401), die konfiguriert ist, eine durch ein Benutzerendgerät, UE, über eine Zelle in einem ersten Modus gesendete Verbindungsanforderungsnachricht zu empfangen;
eine Umleitungsentscheidungseinheit (402), die konfiguriert ist, eine Umleitungsentscheidung zu treffen, nachdem die Empfangseinheit die Verbindungsanforderungsnachricht empfangen hat;
eine Sendeeinheit (403), die konfiguriert ist, nachdem die Umleitungsentscheidungseinheit bestimmt hat, dass das UE in eine durch ein Netzwerkgerät in einem zweiten Modus verwaltete Zelle in einem zweiten Modus umgeleitet wird, eine Mitteilungsnachricht zu senden, um anzufordern, dass das Netzwerkgerät in einem zweiten Modus einen Verbindungsaufbauparameter für das UE zuteilt; und
eine Weiterleitungseinheit (404), die konfiguriert ist, eine Antwortnachricht, die den durch das Netzwerkgerät in einem zweiten Modus gesendeten Verbindungsaufbauparameter übermittelt, zu empfangen und den Verbindungsaufbauparameter an das UE für das UE, das eine Verbindung zum Netzwerkgerät in einem zweiten Modus gemäß dem Verbindungsaufbauparameter aufbaut, zu senden,
**dadurch gekennzeichnet, dass**
die Verbindungsanforderungsnachricht Diensttypangabe-Informationen umfasst, die genutzt werden, um einen Typ eines durch das UE initiierten Dienstes anzugeben, und die Umleitungsentscheidungseinheit ferner konfiguriert ist, eine Umleitungsentscheidung aus einem verbindungslosen Zustand zwischen dem UE und
dem Netzwerkgerät in einem ersten Modus zu treffen, sowie:
einen Typ eines durch das UE initiierten Dienstes gemäß den Diensttypangabe-Informationen zu erfassen; und,
wenn der Typ des durch das UE initiierten Dienstes ein vorgegebener Diensttyp ist, zu bestimmen, dass das UE in die Zelle in einem zweiten Modus umgeleitet wird.

8. Netzwerkgerät in einem ersten Modus nach Anspruch 7, wobei die Umleitungsentscheidungseinheit, wenn die Verbindungsanforderungsnachricht Diensttypangabe-Informationen umfasst, die genutzt werden, um einen Typ eines durch das UE initiierten Dienstes anzugeben, ferner konfiguriert ist:
einen Typ eines durch das UE initiierten Dienstes gemäß den Diensttypangabe-Informationen zu erfassen; und,
wenn der Typ des durch das UE initiierten Dienstes ein vorgegebener Diensttyp ist, die Lastinformationen der Zelle in einem zweiten Modus zu erfassen und die Umleitungsentscheidung gemäß den Lastinformationen der Zelle in einem zweiten Modus zu treffen.

9. Netzwerkgerät in einem ersten Modus nach einem der Ansprüche 7 bis 8, wobei die Umleitungsentscheidungseinheit, wenn mindestens eine Zelle in einem zweiten Modus, die eine Bedingung der Umleitungsentscheidung erfüllt, vorhanden ist, ferner konfiguriert ist:
eine Umleitungszielzelle aus der Zelle in einem zweiten Modus, die die Bedingung der Umleitungsentscheidung erfüllt, gemäß einer vorgegebenen Umleitungszielzellenauswahlbedingung auszuwählen; und,
wenn die Umleitungszielzelle erfolgreich ausgewählt wird, der Sendeeinheit mitzuteilen, dass die Mitteilungsnachricht zu senden ist, um anzufordern, dass das Netzwerkgerät in einem zweiten Modus den Verbindungsaufbauparameter für das UE zuteilt.

10. Netzwerkgerät in einem ersten Modus nach Anspruch 9, wobei die Umleitungsentscheidungseinheit, wenn die Verbindungsanforderungsnachricht Messinformationen der Zelle in einem zweiten Modus, die durch das UE gemessen werden, umfasst, ferner konfiguriert ist:
die durch das UE gemessenen Messinformationen der Zelle in einem zweiten Modus zu erfassen; und,
wenn Messinformationen mindestens einer Zelle in der mindestens einen Zelle in einem zweiten Modus, die die Bedingung der Umleitungsentscheidung erfüllt, eine vorgegebene Bedingung erfüllen, eine Zelle aus der mindestens einen Zelle, die die vorgegebene Bedingung erfüllt, als die Umleitungszielzelle auszuwählen und der Sendeeinheit mitzuteilen, dass die Mitteilungsnachricht zu senden ist.

11. Netzwerkgerät in einem ersten Modus nach einem der Ansprüche 7 bis 10, wobei das Netzwerkgerät in einem ersten Modus, wenn die Verbindungsanforderungsnachricht ein Verbindungsumleitungskennzeichenbit umfasst, das genutzt wird, um anzugeben, ob das UE die Intersystem-Verbindungsumleitung unterstützt, ferner Folgendes umfasst:
eine UE-Unterstützungsfähigkeitsbestimmungseinheit, die konfiguriert ist, das Verbindungsumleitungskennzeichenbit aus der durch die Empfangseinheit empfangenen Verbindungsanforderungsnachricht zu erfassen und, wenn das Verbindungsumleitungskennzeichenbit angibt, dass das UE die Intersystem-Verbindungsumleitung unterstützt, der Umleitungsentscheidungseinheit mitzuteilen, dass die Umleitungsentscheidung zu treffen ist.

## Revendications

1. Procédé de redirection de connexion d'interface air inter-systèmes, le procédé comprenant les étapes suivantes :
réception (102), par un dispositif réseau de premier mode, d'un message de demande de connexion envoyé par un équipement utilisateur, noté UE, via une cellule de premier mode, et prise, par le dispositif réseau de premier mode, d'une décision de redirection ;
suite à la détermination de rediriger l'UE vers une cellule de deuxième mode gérée par un dispositif réseau de deuxième mode, envoi (103), par le dispositif réseau de premier mode, d'un message de notification servant à demander au dispositif réseau de deuxième mode d'allouer un paramètre d'établissement de connexion pour l'UE ; et
réception (106), par le dispositif réseau de premier mode, d'un message de réponse véhiculant le paramètre d'établissement de connexion envoyé par le dispositif réseau de deuxième mode ; et
envoi (106), par le dispositif réseau de premier mode, du paramètre d'établissement de connexion à l'UE,
établissement (108), par l'UE, d'une connexion avec le dispositif réseau de deuxième mode selon le paramètre d'établissement de connexion,
**caractérisé en ce que**
le message de demande de connexion comprend des informations d'indication de type de service, lesdites informations d'indication de type de service servant à indiquer un type d'un service engagé par l'UE, et l'étape de prise d'une décision de redirection est mise en oeuvre à partir d'un état sans connexion entre l'UE et le dispositif réseau de premier mode et comprend les étapes suivantes :
acquisition, selon les informations d'indication de type de service, d'un type d'un service engagé par l'UE ; et
lorsque le type du service engagé par l'UE est un type de service prédéfini, détermination de rediriger l'UE vers la cellule de deuxième mode.

2. Procédé selon la revendication 1, dans lequel l'étape de prise d'une décision de redirection comprend en outre les étapes suivantes :
acquisition (203, 303) d'informations de charge relatives à la cellule de deuxième mode ; et
prise (203, 303) de la décision de redirection selon les informations de charge relatives à la cellule de deuxième mode.

3. Procédé selon la revendication 2, dans lequel l'étape d'acquisition d'informations de charge relatives à la cellule de deuxième mode est mise en oeuvre suite à l'étape d'acquisition, selon les informations d'indication de type de service, du type de service engagé par l'UE, pour donner lieu, lorsque le type du service engagé par l'UE est un type de service prédéfini, à l'acquisition des informations de charge relatives à la cellule de deuxième mode et à la prise de la décision de redirection selon les informations de charge relatives à la cellule de deuxième mode.

4. Procédé selon l'une quelconque des revendications 1 à 3, lequel procédé comprend en outre, s'il existe au moins une cellule de deuxième mode qui remplit une condition de la décision de redirection, préalablement à l'étape d'envoi d'un message de notification visant à demander au dispositif réseau de deuxième mode d'allouer un paramètre d'établissement de connexion pour l'UE, les étapes suivantes :
sélection, par le dispositif réseau de premier mode, selon une condition prédéfinie de sélection de cellule cible de redirection, d'une cellule cible de redirection à partir de la cellule de deuxième mode qui remplit la condition de la décision de redirection ; et
lorsque la cellule cible de redirection est sélectionnée avec succès, envoi du message de notification visant à demander au dispositif réseau de deuxième mode d'allouer le paramètre d'établissement de connexion pour l'UE.

5. Procédé selon la revendication 4, dans lequel, lorsque le message de demande de connexion comprend des informations de mesure relatives à la cellule de deuxième mode mesurées par l'UE, l'étape de sélection, selon une condition prédéfinie de sélection de cellule cible de redirection, d'une cellule cible de redirection à partir de la cellule de deuxième mode qui remplit la condition de la décision de redirection comprend les étapes suivantes :
acquisition des informations de mesure relatives à la cellule de deuxième mode mesurées par l'UE ; et
lorsque des informations de mesure relatives à au moins une cellule dans l'au moins une cellule de deuxième mode qui remplit la condition de la décision de redirection remplissent une condition prédéfinie, sélection, comme cellule cible de redirection, d'une cellule à partir de l'au moins une cellule qui remplit la condition prédéfinie.

6. Procédé selon l'une quelconque des revendications 1 à 5, lequel procédé comprend en outre, lorsque le message de demande de connexion comprend un bit drapeau de redirection de connexion servant à indiquer si l'UE prend en charge une redirection de connexion inter-systèmes, préalablement à l'étape de prise d'une décision de redirection, les étapes consistant à :
acquisition, par le dispositif réseau de premier mode, du bit drapeau de redirection de connexion ; et
lorsque le bit drapeau de redirection de connexion indique que l'UE prend en charge une redirection de connexion inter-systèmes, prise de la décision de redirection.

7. Dispositif réseau de premier mode pour une redirection de connexion d'interface air inter-systèmes, le dispositif réseau de premier mode comprenant :
une unité de réception (401), configurée pour recevoir un message de demande de connexion envoyé par un équipement utilisateur, noté UE, via une cellule de premier mode,
une unité de décision de redirection (402), configurée pour prendre une décision de redirection après que l'unité de réception a reçu le message de demande de connexion ;
une unité d'envoi (403), configurée pour, après que l'unité de décision de redirection a déterminé de rediriger l'UE vers une cellule de deuxième mode gérée par un dispositif réseau de deuxième mode, envoyer un message de notification servant à demander au dispositif réseau de deuxième mode d'allouer un paramètre d'établissement de connexion pour l'UE ; et
une unité de retransmission (404), configurée pour recevoir un message de réponse véhiculant le paramètre d'établissement de connexion envoyé par le dispositif réseau de deuxième mode, et pour envoyer le paramètre d'établissement de connexion à l'UE pour que l'UE établisse une connexion avec le dispositif réseau de deuxième mode selon le paramètre d'établissement de connexion,
**caractérisé en ce que**
le message de demande de connexion comprend des informations d'indication de type de service servant à indiquer un type d'un service engagé par l'UE, et l'unité de décision de redirection est configurée en outre pour prendre une décision de redirection à partir d'un état sans connexion entre l'UE et le dispositif réseau de premier mode, ainsi que pour :
acquérir, selon les informations d'indication de type de service, un type d'un service engagé par l'UE ; et
lorsque le type du service engagé par l'UE est un type de service prédéfini, déterminer de rediriger l'UE vers la cellule de deuxième mode.

8. Dispositif réseau de premier mode selon la revendication 7, dans lequel, lorsque le message de demande de connexion comprend des informations d'indication de type de service servant à indiquer un type d'un service engagé par l'UE, l'unité de décision de redirection est configurée en outre pour :
acquérir, selon les informations d'indication de type de service, un type d'un service engagé par l'UE ; et
lorsque le type du service engagé par l'UE est un type de service prédéfini, acquérir les informations de charge relatives à la cellule de deuxième mode et prendre la décision de redirection selon les informations de charge relatives à la cellule de deuxième mode.

9. Dispositif réseau de premier mode selon l'une quelconque des revendications 7 à 8, lequel dispositif réseau de premier mode, s'il existe au moins une cellule de deuxième mode qui remplit une condition de la décision de redirection, est configuré en outre pour :
sélectionner, selon une condition prédéfinie de sélection de cellule cible de redirection, une cellule cible de redirection à partir de la cellule de deuxième mode qui remplit la condition de la décision de redirection ; et
lorsque la cellule cible de redirection est sélectionnée avec succès, notifier à l'unité d'envoi d'envoyer le message de notification visant à demander au dispositif réseau de deuxième mode d'allouer le paramètre d'établissement de connexion pour l'UE.

10. Dispositif réseau de premier mode selon la revendication 9, dans lequel, lorsque le message de demande de connexion comprend des informations de mesure relatives à la cellule de deuxième mode mesurées par l'UE, l'unité de décision de redirection est configurée en outre pour :
acquérir les informations de mesure relatives à la cellule de deuxième mode mesurées par l'UE ; et
lorsque des informations de mesure relatives à au moins une cellule dans l'au moins une cellule de deuxième mode qui remplit la condition de la décision de redirection remplissent une condition prédéfinie, sélectionner, comme cellule cible de redirection, une cellule à partir de l'au moins une cellule qui remplit la condition prédéfinie, et notifier à l'unité d'envoi d'envoyer le message de notification.

11. Dispositif réseau de premier mode selon l'une quelconque des revendications 7 à 10, lequel dispositif réseau de premier mode, lorsque le message de demande de connexion comprend un bit drapeau de redirection de connexion servant à indiquer si l'UE prend en charge une redirection de connexion inter-systèmes, comprend en outre :
une unité de détermination de capacité de prise en charge par l'UE, configurée pour acquérir le bit drapeau de redirection de connexion à partir du message de demande de connexion reçu par l'unité de réception et, lorsque le bit drapeau de redirection de connexion indique que l'UE prend en charge une redirection de connexion inter-systèmes, notifier à l'unité de décision de redirection de prendre la décision de redirection.
